# EUROPEAN PATENT SPECIFICATION

(11) **EP 3 422 611 B1**
(45) Date of publication and mention of the grant of the patent: **13.10.2021**
(21) Application number: 17305849.6
(22) Date of filing: 30.06.2017
(51) Int. Cl.: H04J 3/16, H04L 12/24

(54) **AUTOMATIC PATHS DISCOVERY IN AN OPTICAL NETWORK**
AUTOMATISCHE WEGERKENNUNG IN EINEM OPTISCHEN NETZWERK
DÉCOUVERTE AUTOMATIQUE DE CHEMINS DANS UN RÉSEAU OPTIQUE

(43) Date of publication of application: 02.01.2019
(73) Proprietor: Alcatel Submarine Networks, 91620 Nozay (FR)
(72) Inventor: FABRE, Olivier, 91620 NOZAY (FR)
(74) Representative: Novagraaf Technologies

(56) References cited:
- EP-A1- 2 296 300
- CN-A- 105 847 028
- DIETER BELLER ALCATEL-LUCENT DEUTSCHLAND AG GERMANY: "Operator specific field instead of SAPI field in OTN TTI for LAD in G.7714.1;WD", ITU-T DRAFT ; STUDY PERIOD 2005-2008, INTERNATIONAL TELECOMMUNICATION UNION, GENEVA ; CH, vol. 14, 12, 12 September 2008 (2008-09-12), pages 1-4, XP017535562, [retrieved on 2008-09-12]
- "Protocol for automatic discovery in SDH and OTN networks; G.7714.1/Y.1705.1 (04/03)", ITU-T STANDARD, INTERNATIONAL TELECOMMUNICATION UNION, GENEVA ; CH, no. G.7714.1/Y.1705.1 (04/03), 22 April 2003 (2003-04-22), pages 1-32, XP017463789, [retrieved on 2003-10-31]

## Description

### Field of the invention

The present invention relates to paths discovery in an optical network, and to a network manager for managing paths discovery in an optical network.

The invention finds an application particularly in optical networks of the standard Optical Transport Network (OTN) type, conforming to the standard defined by the International Telecommunication Union - Telecommunication Standardization Sector (ITU-T) in the Recommendation G.709.

The invention is also of particular interest in a network architecture of the Software Design Network (SDN) type where network management functionalities can be fully virtualized.

### Background of the invention

An optical network, such as an OTN as defined by the ITU-T Recommendation G.709, is composed of a set of optical network elements connected by optical links, such as optical fiber links. These network elements are able to provide functions such as transport, multiplexing, routing, or management of client signal.

Many networks are composed by network elements from many manufacturers and equipment vendors. Even if the network elements use standard transmission protocols to be interconnected with each other, each manufacturer provides a network management suite to supervise the equipments they provide.

An operator has therefore to manage a whole network with these different network managers and is not able to manage its own network from end to end.

When an OTN is newly created and managed by a network manager, it is quite easy to create paths in this network and supervise them. But when an OTN is already deployed and in service, it can take a long time to get to supervising all paths in traffic with a new network manager.

In some cases, another problem is to centralize several network managers with different versions, different database architecture, different database models, etc... Indeed, during the last decade, the programing languages have evolved intensively, and migrating a database has therefore become complex and difficult for maintenance.

A way to try to address some of the above problems is to perform a manual mapping of the network in the network managers. The network can be described in a description file manually prepared in advance and entered in the managers. This can lead to inaccuracies and difficulties in keeping such a description file updated. The network can also be described manually directly on the network manager using a graphical user interface. This however can be long repetitive when the size of the network is important, and this remains subject to errors.

Another way to address these problems would be to automate the network mapping. But this must be done in a non-intrusive manner, with no impact on the traffic and on the performance monitoring (ie: without having to delete or modify the performance monitoring settings), and with no alarm generation. Such impacts can indeed not be accepted by an operator.

Many OTN networks are thus made up of equipment with several network elements from several suppliers. Even if these equipments use standardized G.709 optical transmission protocols, each provider provides the operator with a network manager supervising its own equipment.

In this context, constraints arise which render the operator unable to handle end-to-end paths through multiple providers in a simple way. The operator must have at disposal all the Network Management System (NMS) interfaces corresponding to the different suppliers to ensure the quality of the transmission of these paths.

It is also becoming difficult to manage database migrations between versions of NMS with several years of deviation, while knowing that the slightest error can potentially lead to loss of traffic on one or more paths.

Document DIETER BELLER ALCATEL-LUCENT DEUTSCHLAND AG GERMANY: "Operator specific field instead of SAPI field in OTN TTI for LAD in G.7714.1;WD", ITU-T DRAFT ; STUDY PERIOD 2005-2008, INTERNATIONAL TELECOMMUNICATION UNION, GENEVA ; CH, vol. 14, 12, 12 September 2008 (2008-09-12), pages 1-4, XP017535562, proposes to use the first 16 bytes of the "Operator specific" field of the OTN TTI (SM/PM overhead) instead of the SAPI field to carry the discovery message for layer adjacency discovery (LAD) as defined in G.7714.1.

Document CN 105 847 028 A (KOREA ELECTRONIC COMMUNICATION RES INST) 10 August 2016 (2016-08-10) discloses discovering the topology of an OTN network using the OTN TTI at the OTU/ODU interface which is carried on the Operator Specific field. Document "Protocol for automatic discovery in SDH and OTN networks; G.7714.1/Y.1705.1 (04/03)", ITU-T STANDARD, INTERNATIONAL TELECOMMUNICATION UNION, GENEVA ; CH, no. G.7714.1/Y.1705.1 (04/03), 22 April 2003 (2003-04-22), pages 1-32, XP017463789, describes methods, procedures and transport plane mechanisms for discovering layer adjacency for ASON according to the requirements of ITU-T Rec. G.7714/Y.1705 and architecture of ITU-T Rec. G.8080/Y.1304. Layer Adjacency Discovery describes the process of discovering the link connection end-point relationships and verifying their connectivity.

There is therefore a need for a method and a system that allows uploading of a full network such as an OTN, at the different levels of the network (Optical channel Transport Unit or OTUx level, and Optical channel Data Unit or ODUx level, of an OTN), automatically without any inputs from the operator except the list of the network elements present in the network.

More generally, there is a need of an optical solution allowing to automatically discover the whole topology of a network from the configuration of the network elements, without impacting the traffic or the quality of the optical line, and without generating alarms.

### Summary of the invention

One of the aim of the invention is therefore to address the shortcomings of the existing solutions as explained above.

To this end, the invention proposes a method that blind and safe automatic (trails and) paths discovery in an OTN, which permits to automatically and reliably map the network without impacting the traffic, performances, etc...

According to a first aspect, the object of the invention is a method of discovering the topology, at Optical channel Transport Unit or OTU, and Optical channel Data Unit or ODU, layers, of at least a part of an Optical Transport Network or OTN comprising a plurality of network elements each of which comprising at least one OTU as a termination point and at least one ODU as another termination point, the OTU and ODU of a network element being able to receive data from and transmit data to the OTU, respectively the ODU, of another network element.

The method comprises:
- discovering one or more optical trails and one or more optical paths between the OTU, respectively the ODU, of a first network element of said part of the OTN, and the OTU, respectively the ODU, of a second network element of said part of the OTN, by:
   ∘ transmitting from the OTU, respectively the ODU, of the first network element, to the OTU, respectively the ODU, of another network element, data in a data frame structured so as to comprise an Operator Specific, OS, field included in a Trail Trace Identifier, TTI, with said OS field storing a transmitted termination point identifier of said OTU, respectively ODU of the first network element (Node_{I});
   ∘ receiving at the OTU, respectively the ODU, of the second network element, from the OTU, respectively the ODU, of another network element, data in a data frame structured so as to comprise an Operator Specific, OS, field included in a Trail Trace Identifier, TTI, with said OS field storing a received termination point identifier of said OTU, respectively ODU of said other network element;
   ∘ checking by a network topology discovery system if the received termination point identifier corresponds to the transmitted termination point identifier, and, if yes, recording in the network topology discovery system an optical trail, respectively path, between the OTU, respectively the ODU of the first network element and the OTU, respectively the ODU of the second network element;
- pairing by the network topology discovery system each of the discovered optical paths between ODU's with a set of one or more of the discovered optical trails between OTU's, such that the first network element of the first trail in said set of one or more trails corresponds to the first network element of said path, and that the second network element of the last trail in said set of one or more trails corresponds to the second network element of said path.

In some embodiments, the method further comprises one or more of the following features, considered alone or according to any technically possible combination:
- the termination point identifier is built using a network element identifier of the corresponding network element, and a local OTU identifier, respectively local ODU identifier, of the corresponding OTU, respectively, inside said corresponding network element;
- the network element identifier is the name of the corresponding network element, and the local OTU identifier, respectively local ODU identifier, is the corresponding port location;
- before transmitting data, the initial content of the OS field in the data frame is stored by the network topology discovery system and replaced by the transmitted termination point identifier, and after checking, the stored initial content of the OS field is reintroduced by the network topology discovery system into the OS field of the data frame.

According to a second aspect, the object of the invention is also a network topology discovery system for discovering the topology, at Optical channel Transport Unit or OTU, and Optical channel Data Unit or ODU, layers, of at least a part of an Optical Transport Network or OTN comprising a plurality of network elements each of which comprising at least one OTU as a termination point and at least one ODU as another termination point, the OTU and ODU of a network element being able to receive data from and transmit data to the OTU, respectively the ODU, of another network element,

The network topology discovery system comprises a discovery module configured to:
- discover one or more optical trails and one or more optical paths between the OTU, respectively the ODU, of a first network element of said part of the OTN, and the OTU, respectively the ODU, of a second network element of said part of the OTN, by:
   ∘ upon transmission from the OTU, respectively the ODU, of the first network element, to the OTU, respectively the ODU, of another network element, of data in a data frame structured so as to comprise an Operator Specific, OS, field included in a Trail Trace Identifier, TTI, with said OS field storing a transmitted termination point identifier of said OTU, respectively ODU of the first network element, and
   ∘ upon reception at the OTU, respectively the ODU, of the second network element, from the OTU, respectively the ODU, of another network element, of data in a data frame structured so as to comprise an Operator Specific, OS, field included in a Trail Trace Identifier, TTI, with said OS field storing a received termination point identifier of said OTU, respectively ODU of said other network element;
   ∘ checking if the received termination point identifier corresponds to the transmitted termination point identifier, and, if yes, recording an optical trail, respectively path, between the OTU, respectively the ODU of the first network element and the OTU, respectively the ODU of the second network element;
- and pair each of the discovered optical paths between ODU's with a set of one or more of the discovered optical trails between OTU's, such that the first network element of the first trail in said in said set of one or more trails corresponds to the first network element of said path, and that the second network element of the last trail in said set of one or more trails corresponds to the second network element of said path.

In some embodiments, the system further comprises one or more of the following features, considered alone or according to any technically possible combination:
- the discovery module is further configured to build the termination point identifier by using a network element identifier of the corresponding network element, and a local OTU identifier, respectively local ODU identifier, of the corresponding OTU, respectively, inside said corresponding network element;
- the network element identifier is the name of the corresponding network element, and the local OTU identifier, respectively local ODU identifier, is the corresponding port location;
- the discovery module is further configured to, before transmitting data by the OTU, respectively the ODU, of the first network element, store the initial content of the OS field in the data frame and replace it by the transmitted termination point identifier, and after checking, reintroduce the stored initial content of the OS field into the OS field of the data frame;
- the system comprises a network manager, the discovery module being implemented in said network manager;
- the system comprises one or more of the network elements of the OTN, the discovery module being implemented in said one or more network elements.

The method and system of the invention allow therefore the automatic and safe upload of the full network, either in the network manager or virtualized in one or more nodes of the network in the form of a SDN software application, directly from the network elements themselves.

Applying it to an OTN, the operator can keep an actual view of the network at trail level (OTUx level) and at paths level (ODUx level).

The method of the invention causes no impact on the traffic and performance monitoring settings, nor does it generate alarms.

### Drawings

The invention and its advantages may be better understood by referring to the description which follows, given as example and for illustrative purpose only, and by referring to the accompanying drawings listed below:
- figure 1: schematic representation of an OTU frame structure used in an OTN;
- figure 2: schematic representation of an ODU frame structure used in an OTN;
- figure 3 to 7: schematic representations of different examples of paths configuration in an OTN, to be discovered according to the invention.

### Detailed description

Without loss of generality, we are considering in the present description the case of networks of the OTN type such as defined in the ITU-T Recommendation G.709.

The method and the system according to the invention allow the automatic discovery of a full OTN by using the Operator Specific (OS) field which can be found in the Trail Trace Identifier (TTI) in the OTUx and ODUx frames.

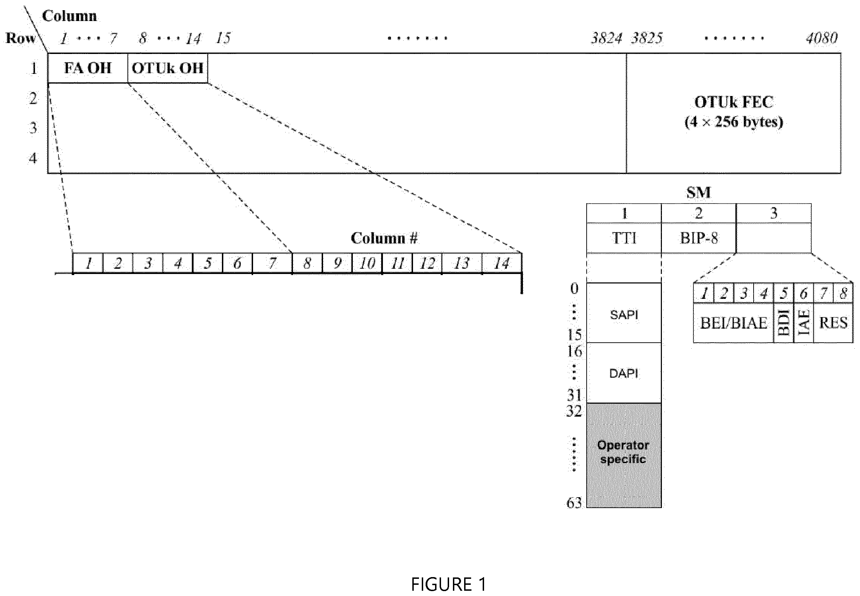

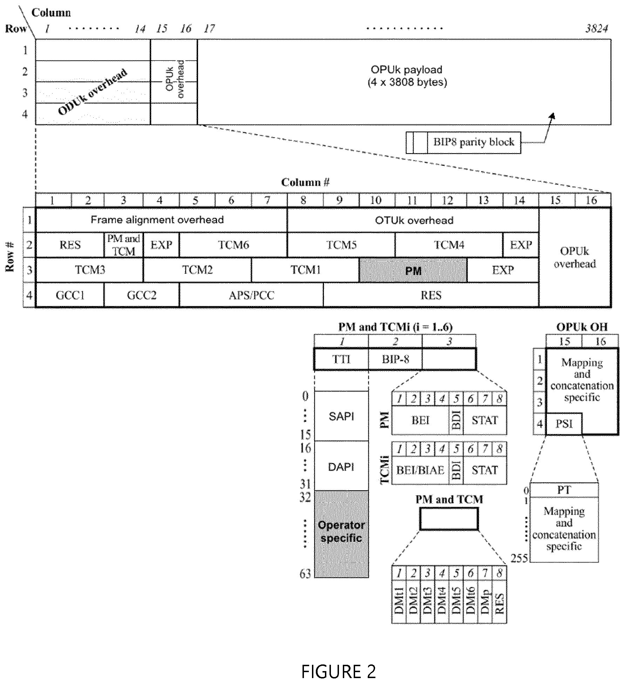

Figures 1 and 2 schematically represent respectively such an OTUx frame structure and such an ODUx frame structure, corresponding respectively to the OTU and ODU layers of an OTN.

Regarding the different fields of the OTU, respectively ODU, frame structures, shown in figure 1 and 2, the man of the art will recognize and identify them as defined in the ITU-T Recommendation G.709.

The specific field of interest according to the invention is the OS field as mentioned above.

This field can be filled without any constraint such that no traffic impacts, nor any alarm, will be generated, compared for example with the use of the SAPI (source access point identifier) / DAPI (destination access point identifier).

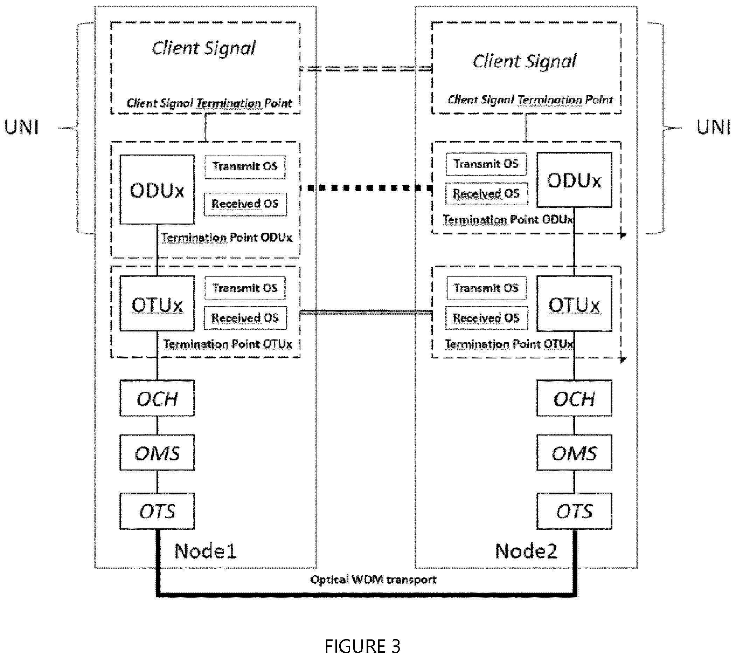

In the communication between two networks elements of an OTN, such as nodes Node_{I}, Node_{J} represented in figures 3 to 7, this field is thus present in the transmitted and received data frames.

Each of the example represented in figures 3 to 7 correspond to an OTN or a sub-part of an OTN, with two or more network elements, or nodes, Node_{I}, Node_{J}.

Each of the nodes comprises termination points at ODUx level, or Optical channel Data Unit ODU, and termination points at OTUx level, or Optical channel Transport Unit OTU, and comprises also one or more processing means and one or more data storing means, or memory means, such as to be able to process any data received or to be sent, and to perform one or more specific functions.

Each node can optically communicate with some of the other nodes in the OTN, thus receive data from and send data from some of these other nodes, through an optical communication line represented in the examples of figures 3 to 7 by thick horizontal line between termination points of two nodes.

The client signal circulating between the client signal termination points of two nodes is represented by a double semi-continuous line.

Classically, each node also comprises an optical channel with full functionality (OCH), an optical multiplex section (OMS) and an optical transmission section (OTS).

Using OTUx and ODUx data frames transported between two nodes of an OTN is an optical approach that reveals the current state of said OTN.

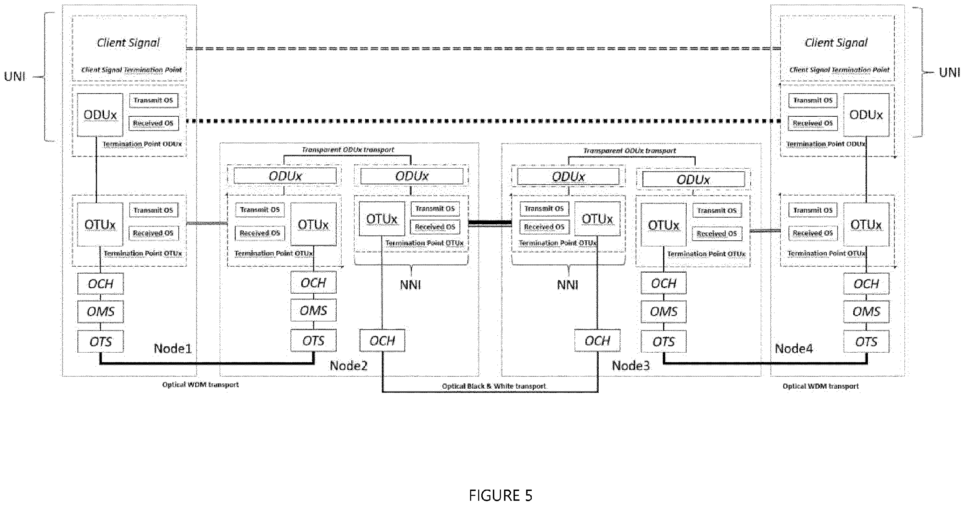

In an OTN:
- a trail is located at OTUx level, and carries one or more paths; a trail is materialized in the example of figures 3 to 7 by a double line (with one of the lines of the double line thicker than the other, in specific cases that will be described further below, related to figures 5 to 7);
- a path is located at ODUx level, and is carried by one or more trails; a path is materialized in the example of figures 3 to 7 by a thick dotted line;
- a high order path is located at ODUx level, and carries one or more ODUy paths, where x > y; a high order path is materialized in the example of figures 3 to 7 by a thick dotted line, so as a normal path;
- a trail, or a path, has always a known end termination point (called A End termination point), compared to a Z End termination point which can be known or unknown;
- a high order path (e.g.: multiplex of 10 x ODU₂ in 1 x ODU₄ as in figure 3) is treated as a path.

Each trail is a point to point connection so a transmitted OS value (TXOS_{I,x} for transmitted OS value of OTU termination point OTUₓ, or ODU termination point ODUₓ, of the node Node_{I}), referred to as Transmit OS in figures 3 to 7, is unique in the network.

The transmitted OS value TXOS_{I,x} is built as a unique termination point identifier, using a network element identifier, for example the network element name Node_{I_name}, and a local termination point identifier, for example the port location ODU_{x_}port_{_}location, or OTU_{x_}port_{_}location.

These identifiers are local to the network element Node_{I}, Node_{J}, or managed by the network topology discovery system of the invention.

The network topology discovery system of the invention comprises a discovery module that performs all the necessary steps for discovering the paths and trails, which can be implemented in one of the network elements, using the processing and memory means of this node, or virtualized in several of these network elements. Alternatively, the discovery module is implemented in a network manager which becomes then part of the network topology discovery system of the invention.

In an OTN, the size of the transmitted OS value TXOS_{I,x} is preferably inferior or equal to 32 characters.

When the discovery module determines that a transmitted OS value TXOS_{I,x} corresponds to a received OS value INCOS_{I,x} (for received OS value from OTU termination point OTUₓ, or ODU termination point ODUₓ, of the node Node_{I}), a trail, respectively a path, is discovered between the corresponding OTU, respectively ODU, termination points at OTUx, respectively ODUx, level. Both such a discovered trail and such a discovered path are recorded by the discovery module.

If we take the example of figure 3, optical paths and trails are to be discovered between network elements Node₁, Node₂ forming at least part of an optical network, each of these network elements Node₁, Node₂ comprising one ODU termination point ODUₓ at ODU level and one OTU termination point OTUₓ at OTU level, which can receive data from and transmit data to one of the OTU, respectively ODU, termination points of the other network element.

Each block (OTUx or ODUx termination points) transmits and receives (if optical link is operational) a unique termination block identifier value in the OS field of the OTU or ODU frame. One OTUx trail is discovered and one ODUx path is also discovered, this ODUx path crossing the OTUx trail.

To this end, a first step is performed of discovering the optical trails and paths (a single path and a single trail in the example in this example of figure 3), between the OTU, OTUₓ, repectively the ODU, ODUₓ, of network elements in the OTN.

In the example of figure 3, therefore one trail is discovered between the OTU OTUₓ of Node₁ and the OTU OTUₓ of Node₂, and one path is discovered between the ODU ODUₓ of Node₁ and the ODU ODUₓ of Node₂.

Then pairing is done by the discovery model between discovered paths and trails. Precisely, each discovered path is paired with a set of one or more discovered trails, in such a manner as to have the first network element of the first trail in the set of trails corresponding the first network element of the path, and to have the second network element of the last trail in the set of trails corresponding to the second network element of the path.

In the example of figure 3, therefore the one discovered trail between Node₁ and Node₂ is simply paired with the one discovered path between Node₁ and Node₂.

Discovery of optical path and trails is done by transmitting from one ODU termination point ODUₓ, respectively one OTU termination point OTUₓ, of a first network element, to one ODU termination point ODUₓ, respectively one OTU termination point OTUₓ, of a second network element, data comprising a transmitted termination point identifier TXOS of the ODU, respectively OTU, of the first network element.

Data is transmitted in the form of a data frame structured to comprise an Operator Specific field, OS field, included in a Trail Trace Identifier, TTI, as explained before. In this OS field is stored the transmitted termination point identifier TXOS.

This transmitted data is received at an ODU termination point ODUₓ, respectively an OTU termination point OTUₓ, of a second network element. On this side of the transmission, the second network element therefore receives a received OS field value INCOS corresponding to the termination point identifier of the ODU, respectively OTU, termination point which has transmitted the data.

The discovery module can then check and determine that the termination point identifier stored in the OS field value INCOS received at the second network element, corresponds to the termination point identifier stored in the OS field value TXOS transmitted from the first network element.

The discovery module then records a discovered path, respectively trail, between the first and the second network element.

Applying this to the example of figure 3 gives the following steps:
- data is transmitted from OTU, respectively ODU, termination point OTUₓ, respectively ODUₓ, of Node₁, which comprises a transmitted OS value TXOS_{1,X} corresponding to the OTU, respectively ODU, termination point OTUₓ , respectively ODUₓ, identifier of Node₁;
- data transmitted from Node₁ is received at the OTU, respectively ODU, termination point OTUₓ, respectively ODUₓ, of Node₂, which comprises a received OS value INCOS_{1,X};
- the discovery module checks and determines that the OS value INCOS_{1,X} received by the OTU, respectively ODU, termination point OTUₓ, respectively ODUₓ, of Node₂, corresponding to the OTU, respectively ODU, termination point OTUₓ, respectively ODUₓ, identifier of Node₁, and records a discovered trail, respectively a discovered path, between Node₁ and Node₂.

The pairing mentioned previously is done using the OS field values to identify the termination points and pairing the paths and trails as mentioned.

With this method, all types of paths can be found: UNI (User-to-Network Interface) to UNI paths; UNI to NNI (Network Node Interface) paths; NNI to NNI paths.

A UNI termination point is automatically at ODUx level, and a NNI termination point is automatically at OTUx level.

This method permits also to detect optical loopbacks that can be used for maintenance or installation activites.

Another advantage of the method is to identifiy the topology of an OTN network through multi-vendor configurations, i.e optical networks connecting equipment from different vendors.

To this end, the current value of the transmitted OS at OTUx and ODUx layers is saved. Then, the transmit OS field is set with the network element name and the termination point identifier name at OTUx and ODUx layers.

The received OS field at OTUx and ODUx layers can then be read, and the previous value of the Transmitted OS at OTUx and ODUx layers can be restored.

In other words, before transmitting the data from one OTU, respectively ODU, termination point OTUₓ, respectively ODUₓ, of one network element to the OTU, respectively ODU, termination point OTUₓ, respectively ODUₓ, of another network element, the initial content of the OS field in the data frame is stored by the discovery module and replaced by the transmitted termination point identifier TXOS_{I,x}. Then, after checking the correspondence between a termination point identifier INCOS_{I,x} received at the termination point OTUₓ, respectively ODUₓ, of the other network element, and the transmitted termination point identifier TXOS_{I,x}, the stored initial content of the OS field is reintroduced by the discovery module into the OS field of the data frame.

Finally, all OTUx trails & ODUx paths can be paired according to the transmit / received OS values as explained previously.

This allows to follow the route of each discovered path according to the list of discovered trails.

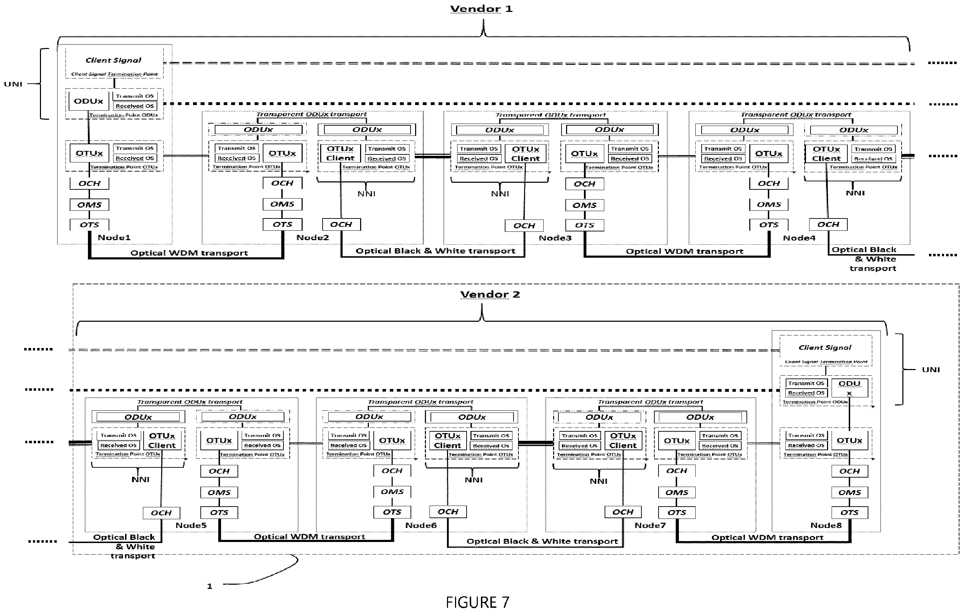

To have the most efficient result, all network elements have to be supervised by the network topology discovery system according to the invention. However, the method will work even if some of the network elements are not supervised or managed by this network topology discovery system applying the method of the invention. But in such a case, the result is not optimized, as will be explain further below regarding the example of figure 7.

The example of figure 3 has been explained above. It represents two network elements Node₁, Node₂ with two termination points configured as UNI linked through 1 x OTS link.

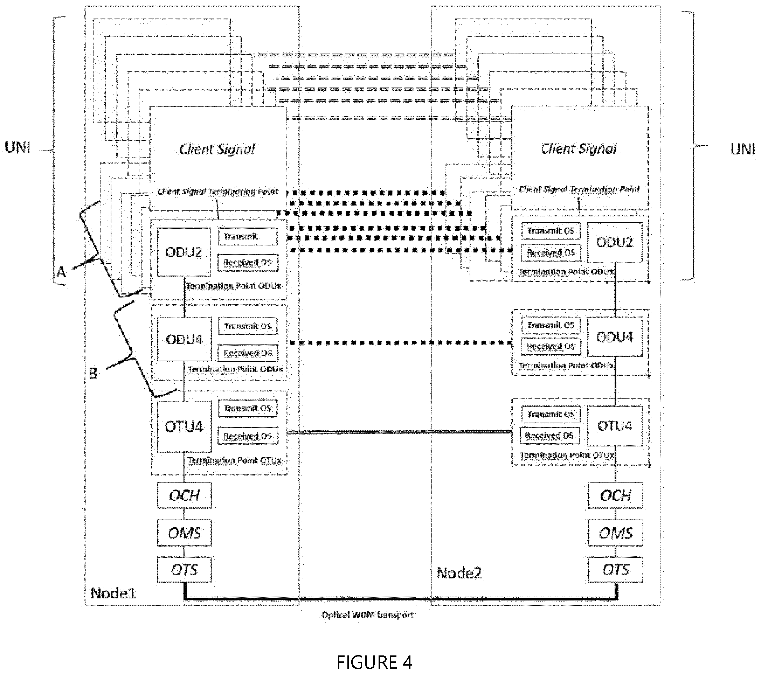

The example of figure 4 represents two network elements Node₁, Node₂, with 10 x ODU₂ paths, grouped under label A, with termination points configured as UNI linked through 1 x OTS link.

Each block, identified as termination points ODUₓ and OTUₓ in the figure, transmits and receives (if optical link is operational) a unique OS identifier value.

An OTU₄ trail is discovered between Node₁ and Node₂. A high order (HO) ODU₄ path (indicated by label B) is discovered between Node₁ and Node₂. Ten ODU₂ paths, grouped under label A, will also be discovered (only six are represented in the figure) between Node₁ and Node₂. Each ODU₂ path will cross the OTU₄ trail (through the HO ODU₄ path).

Figure 5 represents four network elements Node_{1 to 4}, with two termination points configured as UNI linked through 2 x OTS links (under label "Optical WDM Transport").

Each block, identified as termination points ODUₓ and OTUₓ in the figure, transmits and receives (if optical link is operational) an unique OS identifier value.

Two OTUx trails are discovered, one between Node₁ and Node₂, and one between Node₃ and Node₄. One OTUx back to back trail is discovered between Node₂ and Node₃ (a back to back connection is a NNI-NNI interconnection between two termination points on client side between two different nodes, here Node₂ and Node₃).

The ODUx path between Node₁ and Node₄ will cross all the OTUx trails.

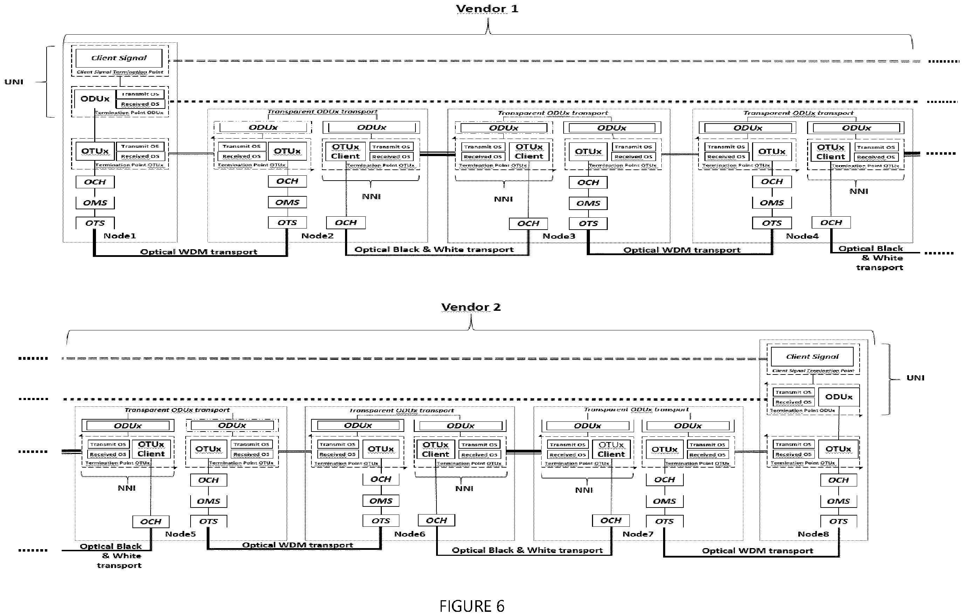

Figure 6 represents eight network elements Node₁ to Node₈, with two termination points configured as UNI linked through 4 x OTS links.

The principle is similar to what is described relatively to figure 3, but the network elements Node₁ to Node₄ are in this case provided by vendor1 and the network elements Node₅ to Node₈ are provided by vendor2.

Figure 7 represents eight network elements Node₁ to Node₈, with two termination points configured as UNI linked through 4 x OTS links.

In this example Vendor2 network elements, which are grouped under reference 1 are unavailable, in terms of data communication network (DCN), so the transmitted OS cannot be configured as syntax expected.

The principle is similar however for applying the solution of the invention, but the result is not optimized. However, a UNI to NNI path will be discovered between Node₁ and Node₄.

This path can be at least monitored by the network topology discovery system on the detected part.

The general principle of discovering the paths and trails is the same in all the above examples of applying the method of the invention with the system of the invention.

First, each OTU and ODU termination points OTUₓ, ODUₓ are identified by a unique identifier as explained above.

Then, the transmitted OS values TXOS_{I,X} and received OS values INCOS_{I,X} are checked and compared so as to determine the presence of a trail (at OTUₓ level) and a path (at ODUₓ level) between two nodes.

The above description has been directed to specific embodiments of this invention which is, however, not limited to these embodiments described for purpose of example only. It will be apparent for the man of the art that other variations and modifications may be made to the described embodiments, with obtaining some or all of their advantages. Therefore, it is the object of the appended claims to cover all such variations and modifications.

## Claims

1. A method of discovering the topology, at Optical channel Transport Unit or OTU, and Optical channel Data Unit or ODU, layers, of at least a part of an Optical Transport Network or OTN comprising a plurality of network elements (Node_{I}, Node_{J}) each of which comprising at least one OTU (OTUₓ) as a termination point and at least one ODU (ODUₓ,) as another termination point, the OTU (OTUₓ) and ODU (ODUₓ) of a network element being able to receive data from and transmit data to the OTU (OTUₓ), respectively the ODU (ODUₓ), of another network element (Node_{I}, Node_{J}), said method comprising:
- discovering one or more optical trails and one or more optical paths between the OTU (OTUₓ), respectively the ODU (ODUₓ), of a first network element (Node_{I}) of said part of the OTN, and the OTU (OTUₓ), respectively the ODU (ODUₓ), of a second network element (Node_{J}) of said part of the OTN, by:
o transmitting from the OTU (OTUₓ), respectively the ODU (ODUₓ), of the first network element (Node_{I}), to the OTU (OTUₓ), respectively the ODU (ODUₓ), of another network element (Node_{J}), data in a data frame structured so as to comprise an Operator Specific, OS, field included in a Trail Trace Identifier, TTI, with said OS field storing a transmitted termination point identifier (TXOS_{I,x}) of said OTU (OTUₓ), respectively ODU (ODUₓ) of the first network element (Node_{I});
∘ receiving at the OTU (OTUₓ), respectively the ODU (ODUₓ), of the second network element (Node_{J}), from the OTU (OTUₓ), respectively the ODU (ODUₓ), of another network element (Node_{I}), data in a data frame structured so as to comprise an Operator Specific, OS, field included in a Trail Trace Identifier, TTI, with said OS field storing a received termination point identifier (INCOS_{I,x}) of said OTU (OTUₓ), respectively ODU (ODUₓ) of said other network element (Node_{I});
∘ checking by a network topology discovery system if the received termination point identifier (INCOS_{I,x}) corresponds to the transmitted termination point identifier (TXOS_{I,x}), and, if yes, recording in the network topology discovery system an optical trail, respectively path, between the OTU (OTUₓ), respectively the ODU (ODUₓ) of the first network element (Node_{I}) and the OTU (OTUₓ), respectively the ODU (ODUₓ) of the second network element (Node_{J});
- pairing by the network topology discovery system each of the discovered optical paths between ODU's (ODUₓ) with a set of one or more of the discovered optical trails between OTU's (OTUₓ), such that the first network element (Node_{I}) of the first trail in said set of one or more trails corresponds to the first network element (Node_{I}) of said path, and that the second network element (Node_{J}) of the last trail in said set of one or more trails corresponds to the second network element (Node_{I}) of said path.

2. The method according to claim 1, wherein the termination point identifier (TXOS_{I,x}, INCOS_{I,x}) is built using a network element identifier (Node_{I_}name) of the corresponding network element (Node_{I}), and a local OTU identifier (OTU_{x_}port_{_}location), respectively local ODU identifier (ODU_{x_}port_{_}location), of the corresponding OTU (OTUₓ), respectively (ODUₓ), inside said corresponding network element (Node_{I}).

3. The method according to claim 2, wherein the network element identifier (Node_{I_}name) is the name of the corresponding network element (Node_{I}), and the local OTU identifier (OTU_{x_}port_{_}location), respectively local ODU identifier (ODU_{x_}port_{_}location), is the corresponding port location.

4. The method according to any of claims 1 to 3, wherein before transmitting data, the initial content of the OS field in the data frame is stored by the network topology discovery system and replaced by the transmitted termination point identifier (TXOS_{I,x}), and after checking, the stored initial content of the OS field is reintroduced by the network topology discovery system into the OS field of the data frame.

5. A network topology discovery system for discovering the topology, at Optical channel Transport Unit or OTU, and Optical channel Data Unit or ODU, layers, of at least a part of an Optical Transport Network or OTN comprising a plurality of network elements (Node_{I}, Node_{J}) each of which comprising at least one OTU (OTUₓ) as a termination point and at least one ODU (ODUₓ,) as another termination point, the OTU (OTUₓ) and ODU (ODUₓ) of a network element being able to receive data from and transmit data to the OTU (OTUₓ), respectively the ODU (ODUₓ), of another network element (Node_{I}, Node_{J}),
wherein said network topology discovery system comprises a discovery module configured to:
- discover one or more optical trails and one or more optical paths between the OTU (OTUₓ), respectively the ODU (ODUₓ), of a first network element (Node_{I}) of said part of the OTN, and the OTU (OTUₓ), respectively the ODU (ODUₓ), of a second network element (Node_{J}) of said part of the OTN, by:
∘ upon transmission from the OTU (OTUₓ), respectively the ODU (ODUₓ), of the first network element (Node_{I}), to the OTU (OTUₓ), respectively the ODU (ODUₓ), of another network element (Node_{J}), of data in a data frame structured so as to comprise an Operator Specific, OS, field included in a Trail Trace Identifier, TTI, with said OS field storing a transmitted termination point identifier (TXOS_{I,x}) of said OTU (OTUₓ), respectively ODU (ODUₓ) of the first network element (Node_{I}), and
∘ upon reception at the OTU (OTUₓ), respectively the ODU (ODUₓ), of the second network element (Node_{J}), from the OTU (OTUₓ), respectively the ODU (ODUₓ), of another network element (Node_{I}), of data in a data frame structured so as to comprise an Operator Specific, OS, field included in a Trail Trace Identifier, TTI, with said OS field storing a received termination point identifier (INCOS_{I,x}) of said OTU (OTUₓ), respectively ODU (ODUₓ) of said other network element (Node_{I});
∘ checking if the received termination point identifier (INCOS_{I,x}) corresponds to the transmitted termination point identifier (TXOS_{I,x}), and, if yes, recording an optical trail, respectively path, between the OTU (OTUₓ), respectively the ODU (ODUₓ) of the first network element (Node_{I}) and the OTU (OTUₓ), respectively the ODU (ODUₓ) of the second network element (Node_{J});
- and pair each of the discovered optical paths between ODU's (ODUₓ) with a set of one or more of the discovered optical trails between OTU's (OTUₓ), such that the first network element (Node_{I}) of the first trail in said in said set of one or more trails corresponds to the first network element (Node_{I}) of said path, and that the second network element (Node_{J}) of the last trail in said set of one or more trails corresponds to the second network element (Node_{I}) of said path.

6. The system according to claim 5, wherein the discovery module is further configured to build the termination point identifier (TXOS_{I,x}, INCOS_{I,x}) by using a network element identifier (Node_{I_}name) of the corresponding network element (Node_{I}), and a local OTU identifier (OTU_{x_}port_{_}location), respectively local ODU identifier (ODU_{x_}port_{_}location), of the corresponding OTU (OTUₓ), respectively (ODUₓ), inside said corresponding network element (Node_{I}).

7. The system according to claim 6, wherein the network element identifier (Node_{I_}name) is the name of the corresponding network element (Node_{I}), and the local OTU identifier (OTU_{x_}port_{_}location), respectively local ODU identifier (ODU_{x_}port_{_}location), is the corresponding port location.

8. The system according to any of claims 5 to 7, wherein the discovery module is further configured to, before transmitting data by the OTU (OTUₓ), respectively the ODU (ODUₓ), of the first network element (Node_{I}), store the initial content of the OS field in the data frame and replace it by the transmitted termination point identifier (TXOS_{I,x}), and after checking, reintroduce the stored initial content of the OS field into the OS field of the data frame.

9. The system of any of claims 5 to 8, wherein it comprises a network manager, the discovery module being implemented in said network manager.

10. The system of any of claims 5 to 9, wherein it comprises one or more of the network elements (Node_{I}, Node_{J}) of the OTN, the discovery module being implemented in said one or more network elements (Node_{I}, Node_{J}).

## Patentansprüche

1. Verfahren zum Entdecken - an optischen Kanaltransporteinheits- bzw. OTU- und optischen Kanaldateneinheits- bzw. ODU-Schichten - der Topologie von mindestens einem Teil eines optischen Transportnetzwerks bzw. OTN, das eine Vielzahl von Netzwerkelementen (Node_{I}, Node_{J}) umfasst, von denen jedes mindestens eine OTU (OTUₓ) als einen Abschlusspunkt und mindestens eine ODU (ODUₓ,) als einen weiteren Abschlusspunkt umfasst, wobei die OTU (OTUₓ) und die ODU (ODUₓ) Daten von der OTU (OTUₓ) bzw. der ODU (ODUₓ) eines anderen Netzwerkelements (Node_{I}, Node_{J}) empfangen und Daten zu denselben übertragen können, wobei das Verfahren Folgendes umfasst:
- Entdecken von einem oder mehreren optischen Wegen und einem oder mehreren optischen Pfaden zwischen der OTU (OTUₓ) bzw. der ODU (ODUₓ) eines ersten Netzwerkelements (Node_{I}) des Teils des OTN und der OTU (OTUₓ) bzw. der ODU (ODUₓ) eines zweiten Netzwerkelements (Node_{J}) des Teils des OTN durch:
∘ Übertragen von Daten in einem Datenframe, der derart strukturiert ist, dass er ein anbieterspezifisches (OS) Feld umfasst, das in einer Wegverfolgungskennung, TTI, beinhaltet ist, von der OTU (OTUₓ) bzw. der ODU (ODUₓ) des ersten Netzwerkelements (Node_{I}) zur OTU (OTUₓ) bzw. zur ODU (ODUₓ) eines anderen Netzwerkelements (Node_{J}), wobei in dem OS-Feld eine übertragene Abschlusspunktkennung (TXOS_{I,x}) der OTU (OTUₓ) bzw. der ODU (ODUₓ) des ersten Netzwerkelements (Node_{I}) gespeichert ist;
∘ Empfangen von Daten in einem Datenframe, der derart strukturiert ist, dass er ein anbieterspezifisches (OS) Feld umfasst, das in einer Wegverfolgungskennung, TTI, beinhaltet ist, an der OTU (OTUₓ) bzw. der ODU (ODUₓ) des zweiten Netzwerkelements (Node_{J}) von der OTU (OTUₓ) bzw. der ODU (ODUₓ) eines anderen Netzwerkelements (Node_{I}), wobei in dem OS-Feld eine empfangene Abschlusspunktkennung (INCOS_{I,x}) der OTU (OTUₓ) bzw. der ODU (ODUₓ) des anderen Netzwerkelements (Node_{I}) gespeichert ist;
∘ Prüfen durch ein Netzwerktopologieentdeckungssystem, ob die empfangene Abschlusspunktkennung (INCOS_{I,x}) der übertragenen Abschlusspunktkennung (TXOS_{I,x}) entspricht, und, wenn ja, Aufzeichnen eines optischen Weges bzw. Pfades zwischen der OTU (OTUₓ) bzw. der ODU (ODUₓ) des ersten Netzwerkelements (Node_{I}) und der OTU (OTUₓ) bzw. der ODU (ODUₓ) des zweiten Netzwerkelements (Node_{J}) im Netzwerktopologieentdeckungssystem;
- Paaren von jedem der entdeckten optischen Pfade zwischen ODUs (ODUₓ) mit einem Satz von einem oder mehreren der entdeckten optischen Wege zwischen OTUs (OTUₓ) durch das Netzwerktopologieentdeckungssystem, derart, dass das erste Netzwerkelement (Node_{I}) des ersten Weges im Satz von einem oder mehreren Wegen dem ersten Netzwerkelement (Node_{I}) des Pfades entspricht und dass das zweite Netzwerkelement (Node_{J}) des letzten Weges im Satz von einem oder mehreren Wegen dem zweiten Netzwerkelement (Node_{I}) des Pfades entspricht.

2. Verfahren nach Anspruch 1, wobei die Abschlusspunktkennung (TXOS_{I,x}, INCOS_{I,x}) unter Verwendung einer Netzwerkelementkennung (Node_{I_}name) des entsprechenden Netzwerkelements (Node_{I}) und einer lokalen OTU-Kennung (OTU_{x_}port_{_}location) bzw. einer lokalen ODU-Kennung (ODU_{x_}port_{_}location) der entsprechenden OTU (OTUₓ) bzw. (ODUₓ) im entsprechenden Netzwerkelement (Node_{I}) aufgebaut wird.

3. Verfahren nach Anspruch 2, wobei die Netzwerkelementkennung (Node_{I_}name) der Name des entsprechenden Netzwerkelements (Node_{I}) ist und die lokale OTU-Kennung (OTU_{x_}port_{_}location) bzw. die lokale ODU-Kennung (ODU_{x_}port_{_}location) der entsprechende Portstandort ist.

4. Verfahren nach einem der Ansprüche 1 bis 3, wobei der anfängliche Inhalt des OS-Feldes im Datenframe vor dem Übertragen von Daten vom Netzwerktopologieentdeckungssystem gespeichert und durch die übertragene Abschlusspunktkennung (TXOS_{I,x}) ersetzt wird und der gespeicherte anfängliche Inhalt des OS-Feldes nach dem Prüfen vom Netzwerktopologieentdeckungssystem wieder in das OS-Feld des Datenframes eingefügt wird.

5. Netzwerktopologieentdeckungssystem zum Entdecken - an optischen Kanaltransporteinheits- bzw. OTU- und optischen Kanaldateneinheits- bzw. ODU-Schichten - der Topologie von mindestens einem Teil eines optischen Transportnetzwerks bzw. OTN, das eine Vielzahl von Netzwerkelementen (Node_{I}, Node_{J}) umfasst, von denen jedes mindestens eine OTU (OTUₓ) als einen Abschlusspunkt und mindestens eine ODU (ODUₓ,) als einen weiteren Abschlusspunkt umfasst, wobei die OTU (OTUₓ) und die ODU (ODUₓ) Daten von der OTU (OTUₓ) bzw. der ODU (ODUₓ) eines anderen Netzwerkelements (Node_{I}, Node_{J}) empfangen und Daten zu denselben übertragen können,
wobei das Netzwerktopologieentdeckungssystem ein Entdeckungsmodul umfasst, das zu Folgendem ausgelegt ist:
- Entdecken von einem oder mehreren optischen Wegen und einem oder mehreren optischen Pfaden zwischen der OTU (OTUₓ) bzw. der ODU (ODUₓ) eines ersten Netzwerkelements (Node_{I}) des Teils des OTN und der OTU (OTUₓ) bzw. der ODU (ODUₓ) eines zweiten Netzwerkelements (Node_{J}) des Teils des OTN durch:
∘ nach der Übertragung von Daten in einem Datenframe, der derart strukturiert ist, dass er ein anbieterspezifisches (OS) Feld umfasst, das in einer Wegverfolgungskennung, TTI, beinhaltet ist, von der OTU (OTUₓ) bzw. der ODU (ODUₓ) des ersten Netzwerkelements (Node_{I}) zur OTU (OTUₓ) bzw. zur ODU (ODUₓ) eines anderen Netzwerkelements (Node_{J}), wobei in dem OS-Feld eine übertragene Abschlusspunktkennung (TXOS_{I,x}) der OTU (OTUₓ) bzw. der ODU (ODUₓ) des ersten Netzwerkelements (Node_{I}) gespeichert ist, und
∘ nach dem Empfang von Daten in einem Datenframe, der derart strukturiert ist, dass er ein anbieterspezifisches (OS) Feld umfasst, das in einer Wegverfolgungskennung, TTI, beinhaltet ist, an der OTU (OTUₓ) bzw. der ODU (ODUₓ) des zweiten Netzwerkelements (Node_{J}) von der OTU (OTUₓ) bzw. der ODU (ODUₓ) eines anderen Netzwerkelements (Node_{I}), wobei in dem OS-Feld eine empfangene Abschlusspunktkennung (INCOS_{I,x}) der OTU (OTUₓ) bzw. der ODU (ODUₓ) des anderen Netzwerkelements (Node_{I}) gespeichert ist;
∘ Prüfen, ob die empfangene Abschlusspunktkennung (INCOS_{I,x}) der übertragenen Abschlusspunktkennung (TXOS_{I,x}) entspricht, und, wenn ja, Aufzeichnen eines optischen Weges bzw. Pfades zwischen der OTU (OTUₓ) bzw. der ODU (ODUₓ) des ersten Netzwerkelements (Node_{I}) und der OTU (OTUₓ) bzw. der ODU (ODUₓ) des zweiten Netzwerkelements (Node_{J});
- und Paaren von jedem der entdeckten optischen Pfade zwischen ODUs (ODUₓ) mit einem Satz von einem oder mehreren der entdeckten optischen Wege zwischen OTUs (OTUₓ), derart, dass das erste Netzwerkelement (Node_{I}) des ersten Weges im Satz von einem oder mehreren Wegen dem ersten Netzwerkelement (Node_{I}) des Pfades entspricht und dass das zweite Netzwerkelement (Node_{J}) des letzten Weges im Satz von einem oder mehreren Wegen dem zweiten Netzwerkelement (Node_{I}) des Pfades entspricht.

6. System nach Anspruch 5, wobei das Entdeckungsmodul ferner dazu ausgelegt ist, die Abschlusspunktkennung (TXOS_{I,x}, INCOS_{I,x}) unter Verwendung einer Netzwerkelementkennung (Node_{I_}name) des entsprechenden Netzwerkelements (Node_{I}) und einer lokalen OTU-Kennung (OTU_{x_}port_{_}location) bzw. einer lokalen ODU-Kennung (ODU_{x_}port_{_}location) der entsprechenden OTU (OTUₓ) bzw. (ODUₓ) im entsprechenden Netzwerkelement (Node_{I}) aufzubauen.

7. System nach Anspruch 6, wobei die Netzwerkelementkennung (Node_{I_}name) der Name des entsprechenden Netzwerkelements (Node_{I}) ist und die lokale OTU-Kennung (OTU_{x_}port_{_}location) bzw. die lokale ODU-Kennung (ODU_{x_}port_{_}location) der entsprechende Portstandort ist.

8. System nach einem der Ansprüche 5 bis 7, wobei das Entdeckungsmodul ferner dazu ausgelegt ist, vor dem Übertragen von Daten durch die OTU (OTUₓ) bzw. die ODU (ODUₓ) des ersten Netzwerkelements (Node_{I}) den anfänglichen Inhalt des OS-Feldes im Datenframe zu speichern und mit der übertragenen Abschlusspunktkennung (TXOS_{I,x}) zu ersetzen und nach dem Prüfen den gespeicherten anfänglichen Inhalt des OS-Feldes wieder in das OS-Feld des Datenframes einzufügen.

9. System nach einem der Ansprüche 5 bis 8, wobei es einen Netzwerkverwalter umfasst, wobei das Entdeckungsmodul im Netzwerkverwalter implementiert wird.

10. System nach einem der Ansprüche 5 bis 9, wobei es ein oder mehrere der Netzwerkelemente (Node_{I}, Node_{J}) des OTN umfasst, wobei das Entdeckungsmodul in dem einen oder den mehreren Netzwerkelementen (Node_{I}, Node_{J}) implementiert wird.

## Revendications

1. Procédé de découverte de la topologie, au niveau de couches d'unité de transport de canal optique ou OTU et d'unité de données de canal optique ou ODU, d'au moins une partie d'un réseau de transport optique ou OTN qui comprend une pluralité d'éléments de réseau (Node_{I}, Node_{J}) qui comprennent chacun au moins une OTU (OTUₓ) en guise de point de terminaison et au moins une ODU (ODUₓ) en guise d'autre point de terminaison, dans lequel l'OTU (OTUₓ) et l'ODU (ODUₓ) d'un élément de réseau sont capables de recevoir des données de la part de et de transmettre des données à l'OTU (OTUₓ), respectivement l'ODU (ODUₓ), d'un autre élément de réseau (Node_{I}, Node_{J}), dans lequel ledit procédé comprend :
- la découverte d'un ou plusieurs chemin(s) optique(s) et d'un ou plusieurs trajet(s) optique(s) entre l'OTU (OTUₓ), respectivement l'ODU (ODUₓ), d'un premier élément de réseau (Node_{I}) de ladite partie de l'OTN, et l'OTU (OTUₓ), respectivement l'ODU (ODUₓ), d'un second élément de réseau (Node_{J}) de ladite partie de l'OTN, en :
∘ transmettant entre l'OTU (OTUₓ), respectivement l'ODU (ODUₓ), du premier élément de réseau (Node_{I}), et l'OTU (OTUₓ), respectivement l'ODU (ODUₓ), d'un autre élément de réseau (Node_{J}), des données dans une trame de données structurée de façon à comprendre un champ propre à un opérateur, OS, inclus dans un identifiant de trace de trajet, TTI, dans lequel ledit champ OS stocke un identifiant de point de terminaison transmis (TXOS_{Lx}) de ladite OTU (OTUₓ), respectivement l'ODU (ODUₓ) du premier élément de réseau (Node_{I}) ;
∘ recevant, au niveau de l'OTU (OTUₓ), respectivement l'ODU (ODUₓ), du second élément de réseau (Node_{J}), de la part de l'OTU (OTUₓ), respectivement l'ODU (ODUₓ), d'un autre élément de réseau (Node_{I}), des données dans une trame de données structurée de façon à comprendre un champ propre à un opérateur, OS, inclus dans un identifiant de trace de trajet, TTI, dans lequel ledit champ OS stocke un identifiant de point de terminaison reçu (INCOS_{I,x}) de ladite OTU (OTUₓ), respectivement l'ODU (ODUₓ), dudit autre élément de réseau (Node_{I}) ;
∘ vérifiant, par un système de découverte de topologie de réseau, si l'identifiant de point de terminaison reçu (INCOS_{I,x}) correspond à l'identifiant de point de terminaison transmis (TXOS_{I,x}) et, si oui, en enregistrant dans le système de découverte de topologie de réseau d'un trajet optique, respectivement un chemin, entre l'OTU (OTUₓ), respectivement l'ODU (ODUₓ), du premier élément de réseau (Node_{I}) et l'OTU (OTUₓ), respectivement l'ODU (ODUₓ), du second élément de réseau (Node_{J}) ;
- associant, par le système de découverte de topologie de réseau, chacun des chemins optiques découverts entre les ODU (ODUₓ) avec un groupe d'un ou plusieurs des trajets optiques découverts entre les OTU (OTUₓ), de sorte que le premier élément de réseau (Node_{I}) du premier trajet dans ledit groupe d'un ou plusieurs trajet(s) corresponde au premier élément de réseau (Node_{I}) dudit chemin, et que le second élément de réseau (Node_{J}) du dernier trajet dudit groupe d'un ou plusieurs trajet(s) corresponde au second élément de réseau (Node_{I}) dudit chemin.

2. Procédé selon la revendication 1, dans lequel l'identifiant de point de terminaison (TXOS_{I,x}, INCOS_{I,x}) est créé à l'aide d'un identifiant d'élément de réseau (Node_{I_}name) de l'élément de réseau correspondant (Node_{I}), et d'un identifiant d'OTU locale (OTU_{x_}port_{_}location), respectivement un identifiant d'ODU locale (ODU_{x_}port_{_}location), de l'OTU correspondante (OTUₓ), respectivement (ODUₓ), à l'intérieur dudit élément de réseau correspondant (Node_{I}).

3. Procédé selon la revendication 2, dans lequel l'identifiant d'élément de réseau (Node_{I_}name) est le nom de l'élément de réseau correspondant (Node_{I}), et l'identifiant d'OTU locale (OTU_{x_}port_{_}location), respectivement l'identifiant d'ODU locale (ODU_{x_}port_{_}location), est l'emplacement de port correspondant.

4. Procédé selon l'une quelconque des revendications 1 à 3, dans lequel, avant de transmettre des données, le contenu initial du champ OS dans la trame de données est stocké par le système de découverte de topologie de réseau et remplacé par l'identifiant de point de terminaison transmis (TXOS_{I,x}), et, après vérification, le contenu initial stocké du champ OS est réintroduit par le système de découverte de topologie de réseau dans le champ OS de la trame de données.

5. Système de découverte de topologie de réseau, au niveau de couches d'unité de transport de canal optique ou OTU, et d'unité de données de canal optique ou ODU, d'au moins une partie d'un réseau de transport optique ou OTN qui comprend une pluralité d'éléments de réseau (Node_{I}, Node_{J}) qui comprennent chacun au moins une OTU (OTUₓ) en guise de point de terminaison et au moins une ODU (ODUₓ) en guise d'autre point de terminaison, dans lequel l'OTU (OTUₓ) et l'ODU (ODUₓ) d'un élément de réseau sont capables de recevoir des données de la part de et de transmettre des données à l'OTU (OTUₓ), respectivement l'ODU (ODUₓ), d'un autre élément de réseau (Node_{I}, Node_{J}),
dans lequel ledit système de découverte de topologie de réseau comprend un module de découverte configuré pour :
- découvrir un ou plusieurs trajet(s) optique(s) et un ou plusieurs chemin(s) optique(s) entre l'OTU (OTUₓ), respectivement l'ODU (ODUₓ), d'un premier élément de réseau (Node^{I}) de ladite partie de l'OTN, et l'OTU (OTUₓ), respectivement l'ODU (ODUₓ), d'un second élément de réseau (Node_{J}) de ladite partie de l'OTN, en :
∘ transmettant entre l'OTU (OTUₓ), respectivement l'ODU (ODUₓ), du premier élément de réseau (Node_{I}), et l'OTU (OTUₓ), respectivement l'ODU (ODUₓ), d'un autre élément de réseau (Node_{J}), des données dans une trame de données structurée de façon à comprendre un champ propre à un opérateur, OS, inclus dans un identifiant de trace de trajet, TTI, dans lequel ledit champ OS stocke un identifiant de point de terminaison transmis (TXOS_{Lx}) de ladite OTU (OTUₓ), respectivement l'ODU (ODUₓ) du premier élément de réseau (Node_{I}) ;
∘ recevant, au niveau de l'OTU (OTUₓ), respectivement l'ODU (ODUₓ), du second élément de réseau (Node_{J}), de la part de l'OTU (OTUₓ), respectivement l'ODU (ODUₓ), d'un autre élément de réseau (Node_{I}), des données dans une trame de données structurée de façon à comprendre un champ propre à un opérateur, OS, inclus dans un identifiant de trace de trajet, TTI, dans lequel ledit champ OS stocke un identifiant de point de terminaison reçu (INCOS_{I,x}) de ladite OTU (OTUₓ), respectivement l'ODU (ODUₓ), dudit autre élément de réseau (Node_{I}) ;
∘ vérifiant si l'identifiant de point de terminaison reçu (INCOS_{I,x}) correspond à l'identifiant de point de terminaison transmis (TXOS_{I,x}) et, si oui, en enregistrant un trajet optique, respectivement un chemin, entre l'OTU (OTUₓ), respectivement l'ODU (ODUₓ), du premier élément de réseau (Node_{I}) et l'OTU (OTUₓ), respectivement l'ODU (ODUₓ), du second élément de réseau (Node_{J}) ;
- et en associant chacun des chemins optiques découverts entre les ODU (ODUₓ) avec un groupe d'un ou plusieurs des trajets optiques découverts entre les OTU (OTUₓ), de sorte que le premier élément de réseau (Node_{I}) du premier trajet dans ledit groupe d'un ou plusieurs trajet(s) corresponde au premier élément de réseau (Node_{I}) dudit chemin, et que le second élément de réseau (Node_{J}) du dernier trajet dudit groupe d'un ou plusieurs trajet(s) corresponde au second élément de réseau (Node_{I}) dudit chemin.

6. Système selon la revendication 5, dans lequel le module de découverte est en outre configuré pour créer l'identifiant de point de terminaison (TXOS_{I,x}, INCOS_{I,x}) à l'aide d'un identifiant d'élément de réseau (Node_{I_}name) de l'élément de réseau correspondant (Node_{I}), et un identifiant d'OTU locale (OTU_{x_}port_{_}location), respectivement un identifiant d'ODU locale (ODU_{x_}port_{_}location), de l'OTU correspondante (OTUₓ), respectivement (ODUₓ), à l'intérieur dudit élément de réseau correspondant (Node_{I}).

7. Système selon la revendication 6, dans lequel l'identifiant d'élément de réseau (Node_{I_}name) est le nom de l'élément de réseau correspondant (Node_{I}), et l'identifiant d'OTU locale (OTU_{x_}port_{_}location), respectivement l'identifiant d'ODU locale (ODU_{x_}port_{_}location), est l'emplacement de port correspondant.

8. Système selon l'une quelconque des revendications 5 à 7, dans lequel le module de découverte est en outre configuré pour, avant de transmettre des données par l'OTU (OTUₓ), respectivement l'ODU (ODUₓ), du premier élément de réseau (Node_{I}), stocker le contenu initial du champ OS dans la trame de données et le remplacer par l'identifiant de point de terminaison transmis (TXOS_{I,x}), et, après vérification, pour réintroduire le contenu initial stocké du champ OS dans le champ OS de la trame de données.

9. Système selon l'une quelconque des revendications 5 à 8, dans lequel il comprend un gestionnaire de réseau, dans lequel le module de découverte est mis en œuvre dans ledit gestionnaire de réseau.

10. Système selon l'une quelconque des revendications 5 à 9, dans lequel il comprend un ou plusieurs des éléments de réseau (Node_{I}, Node_{J}) de l'OTN, dans lequel le module de découverte est mis en œuvre dans ledit ou lesdits élément(s) de réseau (Node_{I}, Node_{J}) .
